# EUROPÄISCHE PATENTSCHRIFT

(11) **EP 1 374 076 B1**
(45) Veröffentlichungstag und Bekanntmachung des Hinweises auf die Patenterteilung: **11.08.2004**
(21) Anmeldenummer: 02732351.8
(22) Anmeldetag: 23.03.2002
(51) Int. Cl.: G06F 13/40

(54) **BUSSTATION ZUM ANSCHLUSS AN EIN BUSSYSTEM FÜR RÜCKHALTEMITTEL UND/ODER SENSOREN**
BUS STATION FOR CONNECTING TO A BUS SYSTEM FOR RESTRAINING MEANS AND/OR SENSORS
STATION BUS A CONNECTER A UN SYSTEME A BUS POUR ELEMENTS DE RETENUE ET/OU DETECTEURS

(30) Priorität: 29.03.2001 DE 10115410
(43) Veröffentlichungstag der Anmeldung: 02.01.2004
(73) Patentinhaber: ROBERT BOSCH GMBH, 70442 Stuttgart (DE); Conti Temic Microelectronic GmbH, 90411 Nürnberg (DE); Siemens AG, 80506 München (DE)
(72) Erfinder: NITSCHKE, Werner, 71254 Ditzingen (DE); MEIER, Klaus-Dieter, 71229 Leonberg (DE); BALZER, Knut, 71717 Beilstein (DE); MAURITZ, Ewald, 71287 Weissach (DE); BUEHRING, Heiko, 26125 Oldenburg (DE); BOGENRIEDER, Hans, 85077 Manching (DE); PFAFFENEDER, Bernd, 93138 Lappersdorf (DE); WULFF, Holger, 85051 Ingolstadt (DE)
(86) Internationale Anmeldenummer: PCT/DE2002/001082
(87) Internationale Veröffentlichungsnummer: WO 2002/080007

(56) Entgegenhaltungen:
- EP-A- 0 735 493
- EP-A- 0 911 223
- DE-A- 19 505 956
- DE-A- 19 611 944
- US-A- 5 126 674

## Beschreibung

Die Erfindung geht aus von einer Busstation zum Anschluß an ein Bussystem für Rückhaltemittel und/oder Sensoren nach der Gattung des unabhängigen Patentanspruchs.

Es ist bereits bekannt, daß bei Rückhaltesystemen Sensoren und/oder Zündmittel als Busstationen an einen Bus anschließbar sind und insbesondere die Sensoren über den Bus Sensorsignale in Datentelegrammen versenden.

Das Dokument EP 0 735 493 offenbart eine Busstation die eine Logikschaltung zur Ablauf steuerung aufweist.

### Vorteile der Erfindung

Die erfindungsgemäße Busstation zum Anschluß an ein Bussystem für Rückhaltemittel und/oder Sensoren mit den Merkmalen des unabhängigen Patentanspruchs hat dem gegenüber den Vorteil, daß durch die Überprüfung der Signale von der Sendestufe bzw. der Energieaufnahme der Busstation eine Fehlerbehandlung selbständig in der Busstation eingeleitet wird. Diese Überprüfung kann vorteilhafterweise permanent erfolgen. Damit wird insbesondere vermieden, daß eine defekte Busstation den Datenverkehr über den Bus blockiert.

Als Busstation wird hier ein Sensor und/oder ein Rückhaltemittel mit einem Zündmittel verstanden.

Durch die in den abhängigen Ansprüchen aufgeführten Maßnahmen und Weiterbildungen sind vorteilhafte Verbesserungen der im unabhängigen Patentanspruch angegebenen Busstation zum Anschluß an ein Bussystem für Rückhaltemittel und/oder Sensoren möglich.

Besonders vorteilhaft ist, daß die Logikschaltung der Busstation bei einem erkannten Fehler die Sendestufe der Busstation von dem Bussystem trennt, so daß die Busstation mit dieser Sendestufe keine Daten mehr über das Bussystem senden kann. Eine empfangene Busstation, beispielsweise ein Bus-Master, erkennt damit sofort einen Fehler der sendenden Busstation durch das Ausbleiben der Daten von dieser Busstation. Damit wird ermöglicht, daß sich ein Fehler einer defekten Busstation nicht'auf die Datenübertragung der anderen Busstationen auswirkt. Damit sinkt auch insgesamt die Busbelastung.

Weiterhin ist von Vorteil, daß die Busstation bei einem Fehler und der Trennung der Sendestufe eine Reservesendestufe mittels eines weiteren Schalters an das Bussystem zuschaltet. Damit wird durch Redundanz gewährleistet, daß die Busstation auch bei einem Versagen der Sendestufe weiterhin betriebsfähig ist.

Es ist darüber hinaus von Vorteil, dass die Signale von der Sendestufe mit einer Referenz verglichen wird, wobei sowohl die Amplitude als auch deren zeitlicher Verlauf, der im voraus bekannt ist, überwacht wird. Damit ist auch die Referenz oder der Sollwert zeitabhängig. Die überwachende Logikschaltung weiß, welche Bits zu welchem Zeitpunkt übertragen werden, da die Logikschaltung die Sendestufe steuert.

Weiterhin ist es von Vorteil, daß die erfindungsgemäße Busstation über das Bussystem ihre Energie erhält und die Sendestufe zum Senden diese Energie moduliert. Damit werden vorteilhafterweise zusätzliche Leitungen für eine Energieübertragung eingespart. Vorteilhafterweise wird dabei eine Strommodulation in Manchestercodierung eingesetzt. Es sind jedoch auch andere Modulationstechniken möglich.

### Zeichnung

Ausführungsbeispiele der Erfindung sind in der Zeichnung dargestellt und werden in der nachfolgenden Beschreibung näher erläutert. Es zeigt:
Figur 1 ein-Bussystem an dem die erfindungsgemäße Busstation angeschlossen ist und
Figur 2 ein Blockschaltbild des Sendeteils der erfindungsgemäßen Busstation.

### Beschreibung

Durch die zunehmende Anzahl von Rückhaltemitteln in einem Fahrzeug wurden entsprechende Buskonzepte zur Verbindung dieser Rückhaltemittel und entsprechender Sensoren entwickelt. Dabei können Zündmittel und Sensoren mit derselben Hardware über ein Bussystem angeschlossen werden. Es wird dabei vor allem ein Bus-Master vorgesehen und die Zündmittel und Sensoren sind die Slaves. Die Slaves beziehen ihre Energie über das Bussystem, das im allgemeinen als ein Zweileitungssystem ausgebildet ist. Die Datenübertragung vom Slave zum Master erfolgt dabei durch Modulation des eigenen Energieverbrauchs in für jeden Slave spezifisch festgelegten Zeitfenstern. Es findet also keine Arbitrierung statt.

Um nun bei Fehlern in den einzelnen Slaves, den Busstationen, einen Zusammenbruch der Datenübertragung von den fehlerfreien Slaves zum Master zu vermeiden, wird erfindungsgemäß eine Fehlerbehandlung in den einzelnen Busstationen selbständig durchgeführt, sobald in den Busstationen ein Fehler erkannt wird. Die Fehlerbehandlung umfaßt entweder die Ansteuerung der Sendestufe, so daß eine Art Regelschleife installiert wird, oder gar bei Überschreiten von einem vorgegebenen Schwellwert die Abschaltung der Sendestufe vom Bussystem. In einer Weiterbildung ist vorgesehen, daß bei einem Abschalten der Sendestufe eine Reservesendestufe zugeschaltet wird, um ein weiteres Senden zu ermöglichen, sofern die Sendestufe die Ursache des aufgetretenen Fehlers ist.

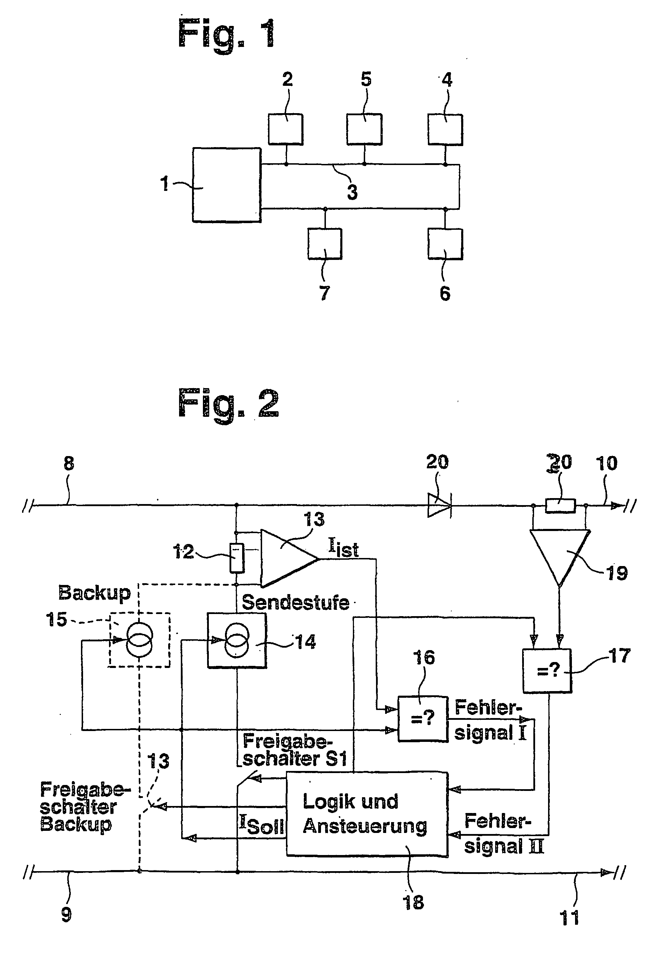

In Figur 1 ist als Blockschaltbild ein Bussystem dargestellt, an das verschiedene Busstationen angeschlossen sind. Es handelt sich hier um ein Master-Slave-Bussystem, d.h. die Slaves, Sensoren und Zündmittel, senden Daten, Sensorenwerte und Diagnosedaten, zu dem Master, während der Master Anforderungen, dass Daten zu dem Master übertragen werden sollen, an die Slaves versendet.

Ein Bus-Master 1 ist an einen als Ring ausgeführten Bus 3 angeschlossen. An den Ring 3 sind Sensoren 2 und 7, sowie Zündmittel 4 bis 6 angeschlossen. Die Sensoren 2 und 7 sind erfindungsgemäß ausgebildet. Es ist jedoch auch möglich, daß die Zündmittel 4-6 erfindungsgemäß gestaltet sind, denn sowohl die Sensoren 2 und 7 als auch die Zündmittel 4-6 sind Busstationen. Bei den Sensoren handelt es sich hier um Beschleunigungssensoren, die zur Aufprallerkennung dienen. Es ist jedoch möglich, auch Drucksensoren, Verformungssensoren und/oder Temperatursensoren zur Aufprallerkennung einzusetzen. Bei den Zündmitteln 4-6 handelt es sich um Zündpillen, die zur Aktivierung eines Rückhaltemittels wie einem Airbag oder einem Gurtstraffer gezündet werden. Bei dem Busmaster 1 handelt es sich hier um ein Steuergerät, das den Auslösealgorithmus zur Aufprallerkennung in Abhängigkeit von den Sensorenwerten berechnet und gegebenenfalls einen Auslösebefehl über den Bus 3 zu wenigstens einem der Zündmittel 4-6 überträgt. Weiterhin wertet der Busmaster 1 die Diagnosedaten von den einzelnen Zündmitteln 4-6 aus, um die Funktionsfähigkeit der einzelnen Zündmittel 4-6 zu überwachen. Der Bus 3 ist hier als Zweidrahtleitung ausgebildet. Es ist jedoch auch eine Eindrahtleitung als Bus 3 möglich. Aus einem Ring sind andere Buskonfigurationen wie Daisy-Chain, parallel oder Mischformen sowie Stichleitungen möglich.

Figur 2 zeigt nun als ein Blockschaltbild die erfindungsgemäße Ausbildung einer Busstation. Über die Leitungen 8 und 9 ist die Busstation an den Bus 3 angeschlossen. Die Leitungen 8 und 9 dienen daher als Mittel zum Empfangen und Senden von Daten. Da hier auch eine Powerline-Datenübertragung vorgenommen wird, also die Modulation der Energieversorgung der Busstationen, dienen die Leitungen 8 und 9 auch als Mittel zur Energieaufnahme. Die Leitung 8 wird hier als High-Side und die Leitung 9 als Low-Side oder Masse verwendet.

An die Leitung 8 sind ein erster Eingang eines Operationsverstärkers 13 ein Shuntwiderstand 12 und eine Anode einer Diode 20 angeschlossen. Auf seiner anderen Seite ist der Shuntwiderstand 12 mit einem zweiten Eingang des Operationsverstärkers 13 und einer Sendestufe 14 sowie einer Backup-Sendestufe 15 verbunden. Bei der Sendestufe 14 und der Backup-Sendestufe 15 handelt es sich hier um steuerbare Stromquellen, wofür übliche, dem Fachmann bekannte Transistorschaltungen verwendet werden.

Die Diode 20 ist auf ihrer Kathodenseite mit einem ersten Eingang eines Operationsverstärkers 19 und einem Shuntwiderstand 20 verbunden. Auf der anderen Seite ist der Shuntwiderstand 20 mit einem Anschluß 10 zu einem, hier nicht dargestellten Sensorelement und einem zweiten Eingang des Operationsverstärkers 19 verbunden. Die Sendestufe 14 weist einen Steuereingang zur Stromsteuerung auf, an den eine Logikschaltung 18 über eine Leitung Iₛₒₗₗ über einen ersten Ausgang angeschlossen ist. Die Leitung Iₛₒₗₗ führt weiterhin zu einem Steuereingang der Backup-Sendestufe 15 und einem ersten Eingang eines Vergleichers 16. Der Vergleicher 16 ist hier ein Komparator. Die Sendestufe 14 ist auf ihrer anderen Seite mit einem Freigabeschalter S1 verbunden. Der Freigabeschalter S1 wird von der Logikschaltung 18 über einen zweiten Ausgang gesteuert. Auf der anderen Seite ist der Freigabeschalter S1 mit der Leitung 9 verbunden.

Die Backup-Sendestufe 15 ist auf ihrer anderen Seite mit einem Freigabeschalter B verbunden, der von der Logikschaltung 18 über einen dritten Ausgang gesteuert wird. Auf der anderen Seite ist der Schalter B mit der Leitung 9 verbunden. Ein Ausgang des Operationsvertärkers 13, der mit Iᵢₛₜ bezeichnet wird, geht an einen zweiten Eingang des Vergleichers 16. Damit werden die Ströme Iₛₒₗₗ und Iᵢₛₜ durch den Vergleicher 16 miteinander verglichen. Ein Ausgang des Vergleichers 16 führt zu einem ersten Eingang der Logikschaltung 18.

Ein vierter Ausgang der Logikschaltung 18 führt zu einem ersten Eingang eines Vergleichers 17 (Komparator). Ein Ausgang des Operationsverstärkers 19 führt zum zweiten Eingang des Vergleichers 17, dessen Ausgang zu einem zweiten Eingang der Logikschaltung 18 führt. Die Leitung 9 ist mit einem Anschluß 11 verbunden, der zu dem Sensorelement führt. Das hier nicht dargestellte Sensorelement ist demnach zwischen den Anschlüssen 10 und 11 geschaltet.

Die Sendestufe 14 kann senden, wenn der Freigabeschalter S1 von der Logikschalung 18 geschlossen wurde. Die Logikschaltung 18 überwacht jedoch den Strom, den die Sendestufe 14 liefert, das ist Iᵢₛₜ, mittels des Shuntwiderstands 12 und des Operationsvertärkers 13. Die Überwachung erfolgt sowohl im Hinblick auf die Amplitude und den zeitlichen Verlauf des Signals. Da die Logikschaltung 18 weiß, welche Signale gesendet werden, also welche Bits, ist der zeitliche Verlauf des Signals der Logikschaltung bekannt.

Die Sendestufe 14 liefert also den Sendestrom Iᵢₛₜ, der im Vergleicher 16 mit dem vorgegebenen Strom Iₛₒₗₗ verglichen wird. Der Strom Iₛₒₗₗ wird von der Logikschaltung 18 vorgegeben. Am Ausgang des Vergleichers 16 wird dann ein Fehlersignal I in Abhängigkeit von dem Vergleich ausgegeben. Das Fehlersignal I kann dabei eine Ja/Nein-Entscheidung anzeigen, ist also Iₛₒₗₗ kleiner als Iᵢₛₜ oder einen, gegebenenfalls bewerteten Differenzwert zwischen Iₛₒₗₗ und Iᵢₛₜ angeben. Es ist möglich, dass anstatt von den tatsächlichen Strömen Iᵢₛₜ und Iₛₒₗₗ von diesen abgeleitete Größen im Vergleicher 16 verglichen werden. Auch das Fehlersignal I gibt den Fehler in Abhängigkeit von der Zeit an.

In Abhängigkeit von diesem Fehlersignal I entscheidet die Logikschaltung 18, ob der Freigabeschalter S1 zu öffnen oder zu schließen ist. Ist das Fehlersignal hoch, ist also die Abweichung zwischen Iᵢₛₜ und Iₛₒₗₗ über einem vorgegebenen Schwellwert, dann funktioniert die Sendestufe 14 nicht korrekt und der Freigabeschalter S1 ist geöffnet, so daß die Sendestufe 14 nicht senden kann. Es wird also eine Stummschaltung vorgenommen.

Die erfindungsgemäße Busstation weist hier die Backup-Sendestufe 15 auf, die nun von der Logikschaltung 18 als Ersatz zugeschaltet werden kann. Dafür wird der Freigabeschalter B geschlossen und wiederum wird der Sendestrom Iᵢₛₜ überprüft, so daß auch hierfür der Vergleicher 16 das Fehlersignal I liefert. Ist das Fehlersignal I in Ordnung, bleibt der Freigabeschalter B geschlossen. Ist jedoch das Fehlersignal I wiederum zu hoch, wird auch der Freigabeschalter B geöffnet, so daß die erfindungsgemäße Busstation nun nicht mehr senden kann, da der Sendestrom weder von der Sendestufe 14 noch von der Backup-Sendestufe 15 nicht dem vorgegebenen Wert entspricht. Die Backup-Sendestufe 15 erfährt also die gleiche Überwachung durch die Logikschaltung 18 wie die Sendestufe 14.

Hier wird auch die Energieaufnahme des der Busstation bzw. Sensors oder Zündmittels überwacht, indem das Ausgangssignal des Operationsverstärkers 19, das charakteristisch für die Energieaufnahme ist, mit einem vorgegebenen Signal der Logikschaltung 18 im Vergleicher 17 verglichen wird. In Abhängigkeit von diesem Vergleich wird dann das Fehlersignal II erzeugt. Das Fehlersignal II zeigt dann an, ob die Energieaufnahme zu hoch oder zu niedrig oder innerhalb vorgegebener Parameter liegt. Zeigt die Energieaufnahme mittels des Fehlersignals II einen Fehler an, öffnet die Logikschaltung 18 den Freigabeschalter S1 und auch den Freigabeschalter B, denn nun ist klar, dass das Sensorelement fehlerhaft Energie aufnimmt und damit voraussichtlich nicht korrekt funktioniert. Damit ist dann gewährleistet, daß eine fehlerhafte Busstation nicht an den Bus 3 angeschlossen ist und so möglicherweise den Bus 3 mit fehlerhaften Daten belegt.

Die Busstation ist hier ein Sensor, es ist jedoch auch möglich, daß die Busstation ein Zündmittel ist. Die Logikschaltung 18 dient hier zur Ablaufsteuerung, denn in Abhängigkeit von den Fehlersignalen I und II schaltet die Logikschaltung 18 die Schalter S1 und B. Die Logikschaltung 18 kann auch als Prozessor ausgebildet sein.

## Patentansprüche

1. Busstation zum Anschluss an ein Bussystem (3) für Rückhaltemittel und/oder Sensoren, wobei die Busstation (2, 7) eine Sendestufe (14, 15) zum Senden von Signalen über das Bussystem (3) und eine Logikschaltung (18) zur Ablaufsteuerung aufweist, **dadurch gekennzeichnet, dass** die Logikschaltung (18) mit wenigstens einem Vergleicher (16, 19) für wenigstens einen Vergleich der Signale der Sendestufe und/oder der Energieaufnahme der Busstation (2, 7) mit einem jeweiligen Sollwert verbunden ist und in Abhängigkeit von dem wenigstens einen Vergleich die Sendestufe (14, 15) ansteuert, dass die Logikschaltung (18) die Signale von der Sendestufe (14,15) sowohl bezüglich deren Amplitude und deren zeitlichem Verlauf mit dem jeweiligen Sollwert überwacht.

2. Busstation nach Anspruch 1, **dadurch gekennzeichnet, dass** bei einer vorgegebenen Überschreitung des jeweiligen Sollwerts durch die Signale und/oder die Energieaufnahme in dem wenigstens einen Vergleicher (16, 19) die Logikschaltung (18) die Sendestufe (14) mit einem ersten Schalter (S1) vom Bussystem (3) trennt.

3. Busstation nach Anspruch 1 oder 2, **dadurch gekennzeichnet, dass** die Logikschaltung (18) bei Trennung der Sendestufe (14) eine Reservesendestufe (15) mittels eines zweiten Schalters (B) an das Bussystem (3) schaltet.

4. Busstation nach einem der vorhergehenden Ansprüche, **dadurch gekennzeichnet, dass** die Busstation (2, 7) über das Bussystem (3) seine Energie erhält und die Sendestufe (14) zum Senden diese Energie moduliert.

## Claims

1. Bus station for connecting to a bus system (3) for restraining means and/or sensors, the bus station (2, 7) having a transmitter stage (14, 15) for transmitting signals via the bus system (3) and a logic circuit (18) for sequence control, **characterized in that** the logic circuit (18) is connected to at least one comparator (16, 19) for at least one comparison of the signals of the transmitter stage and/or of the power drain of the bus station (2, 7) with a respective set point value, and the transmitter stage (14, 15) is actuated as a function of the at least one comparison, **in that** the logic circuit (18) monitors the signals from the transmitter stage (14, 15) both with respect to the their amplitude and their profile over time with the respective set point value.

2. Bus station according to Claim 1, **characterized in that** when the signals and/or the power drain in the at least one comparator (16, 19) exceeds the respective set point value in a predefined way, the logic circuit (18) disconnects the transmitter stage (14) from the bus system (3) with a first switch (S1).

3. Bus station according to Claim 1 or 2, **characterized in that**, when the transmitter stage (14) is disconnected, the logic circuit (18) connects a backup transmitter stage (15) to the bus system (3) by means of a second switch (B).

4. Bus station according to one of the preceding claims, **characterized in that** the bus station (2, 7) receives its power via the bus system (3), and the transmitter stage (14) modulates this power in order to transmit.

## Revendications

1. Station bus à connecter à un système de bus pour des moyens de retenue et/ou des capteurs selon lequel :
la station bus (2, 7) comprend un étage d'émission (14, 15) pour émettre des signaux par le système de bus (3) et un circuit logique (18) pour commander le déroulement,
**caractérisée en ce que**
le circuit logique (18) est relié à au moins un comparateur (16, 19) pour au moins une comparaison à une valeur de consigne respective des signaux de l'étage de puissance et/ou de l'alimentation en énergie de la station bus (2, 7), et en fonction d'au moins une comparaison on commande l'étage d'émission (14, 15), le circuit logique (18) surveillant les signaux de l'étage d'émission (14, 15) à la fois pour leur amplitude et pour leur évolution dans le temps avec la valeur de consigne respective.

2. Station bus selon la revendication 1,
**caractérisée en ce que**
en cas de dépassement prédéterminé de la valeur de consigne respective par les signaux et/ou la prise d'énergie dans au moins un comparateur (16, 19), le circuit logique (18) coupe l'étage d'émission (14) par rapport au système de bus (3) par un premier interrupteur (S1).

3. Station bus selon la revendication 1 ou la revendication 2,
**caractérisée en ce qu'**
à la séparation de l'étage d'émission (14), le circuit logique (18) commute un étage de réserve de puissance (15) à l'aide d'un second interrupteur (B) sur le système de bus (3).

4. Station bus selon l'une des revendications précédentes,
**caractérisée en ce que**
la station bus (2, 7) reçoit son énergie par le système de bus (3) et l'étage d'émission (14) module cette énergie pour l'émission.
